# FASCICULE DE BREVET EUROPEEN

(11) **EP 1 251 616 B1**
(45) Date de publication et mention de la délivrance du brevet: **04.02.2004**
(21) Numéro de dépôt: 02290960.0
(22) Date de dépôt: 16.04.2002
(51) Int. Cl.: H02G 3/08, H02G 15/013

(54) **Joint d'étanchéité pour câble électrique**
Abdichtung für elektrisches Kabel
Sealing for electrical cable

(30) Priorité: 17.04.2001 FR 0105200
(43) Date de publication de la demande: 23.10.2002
(73) Titulaire: LEGRAND, F-87000 Limoges (FR); LEGRAND SNC, F-87000 Limoges (FR)
(72) Inventeur: Catteau, Frédéric, 87000 Limoges (FR); Hawksworth, Andrew, Ironbridge, Shropshire TF8 7AQ (GB)
(74) Mandataire: Santarelli

(56) Documents cités:
- WO-A-89/10021
- WO-A-97/41474
- DE-A- 19 757 282
- FR-A- 2 492 151
- US-A- 4 839 471

## Description

La présente invention est du domaine des joints d'étanchéité pour câble électrique.

Plus précisément, l'invention concerne un joint d'étanchéité adapté à assurer l'étanchéité d'un câble électrique, le câble pouvant être pratiquement de section quelconque.

On connaît, plus particulièrement dans le domaine des boîtes de dérivation, des bouchons adaptés à assurer l'étanchéité autour de câbles pouvant avoir différentes sections. Il existe par exemple des bouchons de forme conique, réalisés en une matière synthétique souple et présentant une suite de gorges coaxiales définissant autant de zones de rupture.

Selon le diamètre du câble à raccorder, l'utilisateur découpe la partie centrale du bouchon selon l'une ou l'autre des gorges annulaires de manière à créer une ouverture centrale suffisante pour permettre le passage du câble.

Il est connu par WO 89/10021A et WO 97/41474A, qui est considéré comme représentant l'état de la technique le plus proche, des joints d'étanchéité formés en deux demi-joints et comprenant des évidements coaxiaux avec plusieurs sections. Les évidements coaxiaux sont disposés de manière successive et permettent une adaptation du joint à des câbles de différentes sections. WO 97/41474A divulgue également une réalisation des évidements précités par des découpes dans une série de lamelles souples. Les lamelles souples assurent l'étanchéité et sont disposées sensiblement parallèles entre elles et perpendiculaires à un axe d'alignement des évidements. Lorsque le joint d'étanchéité selon WO 97/41474A est monté sur un câble, les lamelles se déforment parallèlement au câble, tout en étant en appui sur ce dernier pour assurer l'étanchéité.

La présente invention vise à améliorer les performances d'étanchéité offertes par les joints de l'état de la technique commentés ci-dessus. En particulier, l'invention vise à garantir dans le temps ces performances lorsque l'installateur doit procéder à de multiples montages et démontages du câble.

Plus précisément, l'invention concerne un joint d'étanchéité adapté à assurer l'étanchéité autour d'un câble, ledit câble pouvant avoir différentes sections, ledit joint comprenant deux demi-joints comportant chacun un bloc de matière déformable élastique étanche dans lequel sont réalisées des découpes et des lamelles, lesdites découpes formant une succession d'évidements sensiblement coaxiaux et de sections différentes lorsque des faces de serrage de chaque demi-joints sont face à face et au plus près l'une de l'autre, lesdites lamelles étant sensiblement parallèles entre elles et perpendiculaires à un axe d'alignement desdits évidements, caractérisé en ce que lesdites lamelles sont conformées pour s'imbriquer les unes entre les autres lorsque des faces de serrage de chaque demi-joint sont face à face et au plus près l'une de l'autre.

Bien entendu, l'invention concerne le cas limite, où la succession d'évidements reconstitue un passage sensiblement conique du câble électrique.

Selon une variante avantageuse, les sections des évidements sont décroissantes à partir d'une face interne dudit bloc.

Cet agencement permet de renforcer l'étanchéité du joint, en particulier lorsque la section du câble ne correspond pas exactement à la section d'un évidement. Dans ce cas, même si de l'humidité parvient à s'introduire entre le câble et le bloc de matière au niveau d'un évidement, l'humidité ne pourra pas se propager vers l'intérieur du bloc de matière au-delà d'un évidement suivant.

Le joint d'étanchéité est en particulier adapté à être monté sur un appareillage électrique. On entend par face interne du bloc de matière, celle se trouvant à l'intérieur de cet appareil électrique. De même, on appellera par la suite « face externe », la face du bloc de matière se trouvant à l'extérieur de cet appareil électrique.

Ainsi, lorsque le câble est positionné à travers les différents évidements, il est enveloppé par la matière déformable élastique étanche. Cette matière se déforme au niveau de chaque évidement de section inférieure à la section du câble pour assurer l'étanchéité. Avec un tel agencement, la matière élastique étanche épouse le câble au plus près, par excès, (c'est-à-dire avec un faible resserrement autour du câble) au niveau de l'évidement dont la section correspond le mieux à celle du câble, ce qui assure une étanchéité optimale à ce niveau. Paradoxalement en effet, le fait de prévoir des évidements de section correspondant à des sections possibles de câble électrique permet de résorber l'espace caractéristique en forme de lèvres, qui se forme autour du câble lorsque le passage du câble est réalisé par exemple par une simple fente.

Selon une autre variante, les évidements ne débouchent pas sur une face externe du bloc.

Ceci permet d'assurer l'étanchéité au niveau du joint, même lorsqu'il n'y a pas de câble électrique de positionné.

Selon une variante préférée, le joint d'étanchéité comporte deux demi-joints, chaque demi-joint comportant un support rigide. Le support rigide comporte une échancrure contenant de la matière déformable élastique étanche dans laquelle sont réalisées des découpes formant chacun des évidements précités lorsque des faces de serrage de chaque demi-joint sont face à face et au plus près l'une de l'autre. La matière déformable élastique étanche s'étend, sur la face de serrage, de part et d'autre de cette échancrure.

Le joint d'étanchéité peut ainsi être monté sur un boîtier en deux parties, chaque demi-joint étant assemblé par son support rigide sur une partie du boîtier. Le câble électrique est positionné entre les échancrures de chaque demi-joint lorsque le boîtier est fermé.

L'étanchéité est assurée autour du câble électrique par la matière déformable élastique étanche contenue dans les échancrures, en particulier au niveau de l'évidement dont la section correspond le mieux à celle du câble, cet évidement étant reconstitué par les découpes des demi-joints.

De plus, l'étanchéité est assurée dans la zone de contact entre les demi-joints grâce à la matière déformable étanche se trouvant sur les surfaces de serrage.

Selon une autre variante, le bloc de matière déformable élastique étanche est constitué de mousse en matière thermoplastique surmoulée sur le support rigide.

Selon une autre variante, chaque demi-joint comporte des lamelles de matière élastique déformable étanche s'étendant au dessus de la face de serrage, les lamelles étant sensiblement parallèles entre elles, et perpendiculaires à un axe d'alignement des évidements. Les lamelles des demi-joints sont conformées pour s'imbriquer les unes entre les autres lorsque les faces de serrage sont face à face et au plus près l'une de l'autre.

Ces lamelles constituent ainsi des chicanes formant barrière à l'humidité éventuelle et renforçant l'étanchéité du joint.

On comprendra mieux l'invention à la lumière de la description qui va suivre donnée à titre d'exemple et faîte en référence aux dessins annexés dans lesquels :
- la figure 1 représente un joint d'étanchéité selon l'invention ;
- la figure 2 représente un demi-joint selon une première perspective ;
- la figure 3 représente un demi-joint selon une deuxième perspective ;
- les figures 4a à 4c représentent un demi-joint respectivement selon des sections IVa-IVa à IVc-IVc de la figure 2 ; et
- la figure 5 représente un demi-joint selon une coupe V-V de la figure 2.

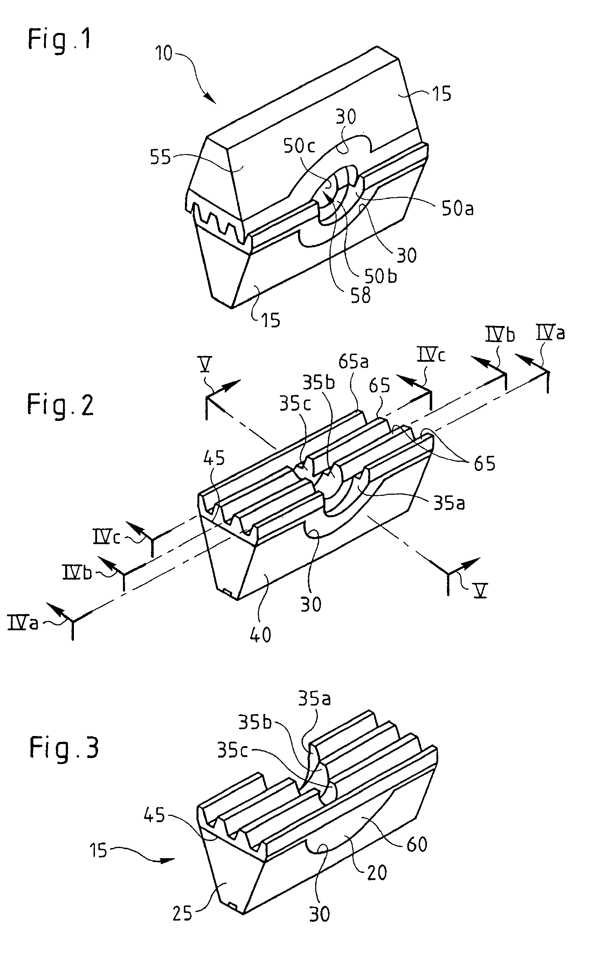

**La figure 1** représente un joint 10 selon l'invention. Le joint 10 comporte deux demi-joints 15, identiques dans le mode de réalisation décrit ici, et dont l'un est représenté à la **figure 2**.

Chaque demi-joint 15 est constitué en matière déformable élastique étanche 20, la matière déformable 20 étant surmoulée sur un support rigide 25. Cette matière déformable 20 est par exemple réalisée en matière thermoplastique, dont la structure est par exemple celle d'une mousse thermoplastique du type connu sous l'abréviation SEBS (pour Styrene Etylene Butylene-Styrene en anglais).

Le support rigide 25 est de forme adaptée pour être monté sur un appareillage électrique. Dans un mode préféré de réalisation le support rigide 25 est de section trapézoïdale.

Quoi qu'il en soit, le support rigide 25 comporte une échancrure 30 contenant de la matière déformable élastique étanche 20, dans laquelle sont réalisées des découpes 35a, 35b, 35c.

Ces découpes 35a, 35b, 35c sont de forme oblongue et de sections décroissantes à partir d'une face interne 40 du bloc de matière 20.

Chaque demi-joint 15 comporte également une face de serrage 45 recouverte de matière déformable élastique étanche 20. Cette matière s'étendant notamment de part et d'autre de l'échancrure 30.

Lorsque les faces de serrage 45 de chaque demi-joint 15 sont face à face et au plus près l'une de l'autre, les découpes 35a, 35b, 35c reconstituent des évidements 50a, 50b, 50c à partir d'une face interne 55 du joint 10. Les échancrures 30 de chaque demi-joint 15 sont alors face à face et constituent un passage 58 de câble électrique C.

Dans l'exemple représenté figure 1, les évidements 50a, 50b, 50c ont des contours circulaires. Bien entendu, ils pourraient avoir d'autres formes adaptées à des câbles de sections de formes différentes.

Comme représenté à la **figure 3**, les découpes 35a, 35b, 35c ne débouchent pas sur une face externe 60 du bloc de matière déformable élastique étanche 20 du demi-joint 15.

Dans le mode de réalisation préféré décrit ici, chaque demi-joint 15 comporte des lamelles 65 de matière élastique déformable étanche 20 s'étendant au dessus de la face de serrage 45, les lamelles 65 étant sensiblement parallèles entre elles, et perpendiculaires à l'axe des évidements 35a, 35b, 35c.

Les lamelles 65 de chaque demi-joint 15 sont conformées pour s'imbriquer les unes entre les autres lorsque les faces de serrage 45 des demi-joints 15 sont face à face et au plus près l'une de l'autre.

De manière préférée, au moins la lamelle extérieure 65a n'est pas découpée.

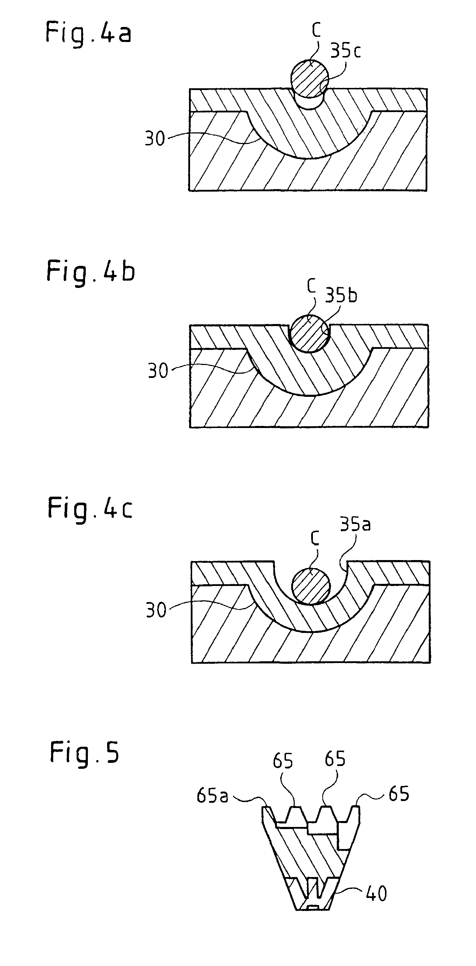

Les **figures 4a** à **4c** représentent un demi-joint 15 respectivement selon des sections IVa-IVa à IVc-IVc de la figure 2, un câble électrique C étant positionné dans l'échancrure 30.

Plus précisément le câble électrique C traverse la face interne 40 du demi-joint 15, puis les découpes 35a, 35b, 35c. Il repose ensuite sur au moins une lamelle de matière élastique déformable étanche 65a non découpée et traverse la face externe 60 du demi-joint 15 par l'échancrure 30.

Lorsque les faces de serrage 45 des demi-joints 15 sont face à face et au plus près l'une de l'autre, l'étanchéité autour du câble électrique C est réalisée à plusieurs niveaux.

L'étanchéité est tout d'abord réalisée par la matière déformable étanche 20 au niveau de la face externe 60, puis au niveau de la découpe 35c. Comme on peut le voir sur la figure 4a, la découpe 35c est telle que la section de l'évidement 50c reconstitué par les découpes 35c des demi-joints 15 est de taille inférieure à la section du câble C.

Ce double niveau d'étanchéité décrit au paragraphe précédent est donc imparfait puisqu'il ne permet pas d'éviter la formation d'un espace en forme de lèvres autour du câble C.

Cependant, comme représenté figure 4b, la découpe 35b est relativement bien adaptée à la section du câble C. A son niveau, la matière déformable élastique étanche 20 épouse le câble C au plus près et assure une étanchéité optimale.

En conclusion, le joint 10 permet d'obtenir une étanchéité optimale autour d'un câble électrique de section quelconque, par la combinaison des évidements 50a, 50b, 50c dont l'un est de section correspondant au mieux à la section de ce câble, et des chicanes constituées par les lamelles 65.

## Revendications

1. Joint d'étanchéité (10) adapté à assurer l'étanchéité autour d'un câble électrique (C), ledit câble (C) pouvant avoir différentes sections, ledit joint (10) comprenant deux demi-joints (15) comportant chacun un bloc de matière déformable élastique étanche (20) dans lequel sont réalisées des découpes (35a, 35b, 35c) et des lamelles (65, 65a), lesdites découpes (35a, 35b, 35c) formant une succession d'évidements (50a, 50b, 50c) sensiblement coaxiaux et des sections différentes lorsque des faces de serrage (45) de chaque demi-joint (15) sont face à face et au plus près l'une de l'autre, lesdites lamelles (65, 65a) étant sensiblement parallèles entre elles et perpendiculaires à un axe d'alignement desdits évidements (50a, 50b, 50c), **caractérisé en ce que** lesdites lamelles (65, 65a) sont conformées pour s'imbriquer les unes entre les autres lorsque des faces de serrage (45) de chaque demi-joint (15) sont face à face et au plus près l'une de l'autre.

2. Joint d'étanchéité (10) selon la revendication 1, **caractérisé en ce que** lesdites sections des évidements (50a, 50b, 50c) sont décroissantes à partir d'une face interne (55) dudit bloc (20).

3. Joint d'étanchéité (10) selon la revendication 1 ou 2, **caractérisé en ce que** lesdits évidements (50a, 50b, 50c) ne débouchent pas sur une face externe (60) dudit bloc (20).

4. Joint d'étanchéité (10) selon l'une quelconque des revendications 1 à 3, **caractérisé en ce que** chaque demi-joint (15) comporte un support rigide (25) muni d'une échancrure (30) contenant de la matière déformable élastique étanche (20) dans laquelle sont réalisées lesdites découpes (35a, 35b, 35c) formant chacun desdits évidements (50a, 50b, 50c) lorsque des faces de serrage (45) de chaque demi-joint (15) sont face à face et au plus près l'une de l'autre, ladite matière déformable élastique étanche (20) s'étendant, sur ladite face de serrage (45), de part et d'autre de ladite échancrure (30).

5. Joint d'étanchéité (10) selon la revendication 4, **caractérisé en ce que** le bloc de matière déformable élastique étanche (20) est constitué d'une mousse en matière thermoplastique, par exemple du type SEBS, surmoulée sur ledit support rigide (25).

6. Joint d'étanchéité (10) selon la revendication 4 ou 5, **caractérisé en ce que** les lamelles (65, 65a) de matière élastique déformable étanche (20) s'étendent au-dessus de la face de serrage (45) de chacun des deux demi-joints (15).

7. Joint d'étanchéité (10) selon l'une quelconque des revendications 1 à 6, **caractérisé en ce que** ladite succession d'évidements (50a, 50b, 50c) reconstitue un passage sensiblement conique du câble électrique (C).

## Claims

1. A sealing grommet (10) adapted to provide a seal around an electrical cable (C), said cable (C) possibly having different cross sections, said sealing grommet (10) comprising two half-grommets (15) each comprising a block of impervious elastically deformable material (20) in which cutouts (35a, 35b, 35c) and half-webs (65, 65a) have been formed, said cutouts (35a, 35b, 35c) forming a succession of substantially coaxial recesses (50a, 50b, 50c) having different cross sections when the gripping faces (45) on each half-grommet (15) are face to face and in closest proximity to each other, said half-webs (65, 65a) being substantially parallel to each other and perpendicular to an alignment axis of said recesses (50a, 50b, 50c), **characterized in that** said half-webs (65, 65a) are shaped to interleave one between the other when the gripping faces (45) of each half-grommet (15) are face to face and in closest proximity to each other.

2. A sealing grommet (10) according to claim 1, **characterized in that** said cross sections of said recesses (50a, 50b, 50c) decrease from one inner face (55) of said block (20).

3. A sealing grommet (10) according to claim 1 or claim 2, **characterized in that** said recesses (50a, 50b, 50c) do not open onto an outer face (60) of said block (20).

4. A sealing grommet (10) according to any one of claims 1 to 3, **characterized in that** each half-grommet (15) comprises a rigid support (25) provided with a scallop (30) containing impervious elastically deformable material (20) in which are formed said cutouts (35a, 35b, 35c), each forming said recesses (50a, 50b, 50c) when the gripping faces (45) of each half-grommet (15) are face to face and in closest proximity to each other, said impervious elastically deformable material (20) extending, on said sealing face (45), either side of said scallop (30).

5. A sealing grommet (10) according to claim 4, **characterized in that** the block of impervious elastically deformable material (20) is constituted by a foam of thermoplastics material, for example of the SEBS type, moulded over said rigid support (25).

6. A sealing grommet (10) according to claim 4 or claim 5, **characterized in that** the half-webs (65, 65a) of impervious elastically deformable material (20) extend over the gripping face (45) of each of the two half-grommets (15).

7. A sealing grommet (10) according to any one of claims 1 to 6, **characterized in that** said succession of recesses (50a, 50b, 50c) forms a substantially conical passage for the electrical cable (C).

## Patentansprüche

1. Dichtung (10), die dafür ausgelegt ist, die Abdichtung um ein elektrisches Kabel (C) herum zu gewährleisten, wobei das Kabel (C) verschiedene Querschnitte besitzen kann, wobei die Dichtung (10) zwei Dichtungshälften (15) umfaßt, die jeweils einen Block aus einem verformbaren elastischen dichten Werkstoff (20) aufweisen, in dem Ausschnitte (35a, 35b, 35c) und Lamellen (65, 65a) hergestellt sind, wobei die Ausschnitte (35a, 35b, 35c) eine Folge von im wesentlichen koaxialen Aussparungen (50a, 50b, 50c) mit verschiedenen Querschnitten bilden, wenn Klemmflächen (45) jeder Dichtungshälfte (15) einander gegenüber und so nahe wie möglich beieinander angeordnet sind, wobei diese Lamellen (65, 65a) im wesentlichen zueinander parallel und zur Fluchtlinie der Aussparungen (50a, 50b, 50c) senkrecht sind, **dadurch gekennzeichnet, daß** diese Lamellen (65, 65a) ausgebildet sind, um ineinander zu greifen, wenn Klemmflächen (45) jeder Dichtungshälfte (15) einander gegenüber und so nahe wie möglich beieinander angeordnet sind.

2. Dichtung (10) nach Anspruch 1, **dadurch gekennzeichnet, daß** die Querschnitte der Aussparungen (50a, 50b, 50c) von einer Innenseite (55) des Blocks (20) an abnehmen.

3. Dichtung (10) nach Anspruch 1 oder 2, **dadurch gekennzeichnet, daß** die Aussparungen (50a, 50b, 50c) nicht an einer Außenseite (60) des Blocks (20) ausmünden.

4. Dichtung (10) nach einem der Ansprüche 1 bis 3, **dadurch gekennzeichnet, daß** jede Dichtungshälfte (15) einen starren Träger (25) aufweist, der mit einer Ausnehmung (30) versehen ist, die dichten elastischen verformbaren Werkstoff (20) enthält, in dem die Ausschnitte (35a, 35b, 35c) hergestellt sind, die jede der Aussparungen (50a, 50b, 50c) bilden, wenn Klemmflächen (45) jeder Dichtungshälfte (15) einander gegenüber und so nahe wie möglich beieinander angeordnet sind, wobei der verformbare elastische dichte Werkstoff (20) sich auf dieser Klemmfläche (45) zu beiden Seiten der Ausnehmung (30) erstreckt.

5. Dichtung (10) nach Anspruch 4, **dadurch gekennzeichnet, daß** der Block aus verformbarem elastischem dichten Werkstoff (20) aus einem Schaum aus thermoplastischem Material beispielsweise vom Typ SEBS besteht, der auf den starren Träger (25) aufgeformt ist.

6. Dichtung (10) nach Anspruch 4 oder 5, **dadurch gekennzeichnet, daß** die Lamellen (65, 65a) aus elastischem verformbarem dichtem Werkstoff (20) sich über der Klemmfläche (45) jeder der beiden Dichtungshälften ((15) erstrecken.

7. Dichtung (10) nach einem der Ansprüche 1 bis 6, **dadurch gekennzeichnet, daß** die Folge von Aussparungen (50a, 50b, 50c) einen im wesentlichen konischen Durchgang für das elektrische Kabel (C) bildet.
